# EUROPÄISCHE PATENTSCHRIFT

(11) **EP 2 834 051 B1**
(45) Veröffentlichungstag und Bekanntmachung des Hinweises auf die Patenterteilung: **28.09.2016**
(21) Anmeldenummer: 13715667.5
(22) Anmeldetag: 05.04.2013
(51) Int. Cl.: B25J 13/06, G05B 19/409

(54) **VERFAHREN ZUR BEDIENUNG EINES INDUSTRIEROBOTERS**
METHOD FOR OPERATING AN INDUSTRIAL ROBOT
PROCÉDÉ POUR COMMANDER UN ROBOT INDUSTRIEL

(30) Priorität: 05.04.2012 DE 102012103032
(43) Veröffentlichungstag der Anmeldung: 11.02.2015
(73) Patentinhaber: Reis Group Holding GmbH & Co. KG, 63785 Obernburg (DE)
(72) Erfinder: SOM, Franz, 64750 Lützelbach (DE)
(74) Vertreter: Stoffregen, Hans-Herbert
(86) Internationale Anmeldenummer: PCT/EP2013/057197
(87) Internationale Veröffentlichungsnummer: WO 2013/150136

(56) Entgegenhaltungen:
- EP-A1- 1 795 315
- DE-T2- 60 309 409

## Beschreibung

Die Erfindung bezieht sich auf ein Verfahren zur Bedienung eines Industrieroboters mittels eines Bediengerätes, umfassend den Verfahrensschritt des Berührens eines virtuellen Bedienelement eines Touch-Displays eines grafischen Bediener-Interfaces, wobei bei Berührung des virtuellen Bedienelementes eine dem Bedienelement zugeordnete Funktion ausgelöst wird und wobei die Bewegung des Industrieroboters relativ zu einem Roboter-Koordinatensystem und die Bewegung auf dem Touch-Display relativ zu einem Display-Koordinatensystem ausgeführt wird.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik, die einen Mikroprozessor umfasst, um mit der Robotersteuerung kommunizieren zu können. Ferner umfasst das Handbediengerät eine als Touch-Screen ausgebildete Anzeige, eine Not-Austaste und einen als Schloss ausgebildeten Umschalter. Zur manuellen Bewegung z.B. eines Roboterarms umfasst das Handbediengerät verschiedene, voneinander unabhängig manuell betätigbare Eingabemittel bzw. Verfahrmittel, die z.B. als 6D-Maus oder als Tipp-Tasten ausgebildet sind. Mittels des Touch-Screens besteht die Möglichkeit, jedem der Verfahrmittel ihr eigenes Bezugskoordinatensystem zuzuordnen.

Bei der bekannten Ausführungsform erfolgt die Steuerung des Industrieroboters jedoch ausschließlich über die manuell betätigbaren Eingabemittel, so dass das Handbediengerät in seiner Herstellung aufwendig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist ein Touch-Screen auf, der einerseits als Ausgabemittel zum Ausgeben von Informationen von der Robotersteuerung, insbesondere zur Darstellung einer Bedienoberfläche, und andererseits als Befehlseingabemittel zum Eingeben von Steuerbefehlen mittels Tasten dient.

Das Handgerät ist mittels einer Klemmeinrichtung, wie sie im Prinzip beispielsweise von Halterungen für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist einen Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf das Touch-Screen zu blicken, um Fehleingaben zu vermeiden. Gleiches gilt bei widrigen Umgebungsbedingungen wie beispielsweise starkem Lichteinfall oder Dunkelheit, die eine Bedienung des Touch-Screens erschweren würden.

Der DE 10 2010 039 540 A1 ist ein Handbediengerät zum manuellen Bewegen eines Roboters zu entnehmen. Das Handbediengerät weist mechanische Eingabe- und Verfahrmittel auf, die zum Bewegen eines Roboterarms Bezugskoordinatensysteme zugeordnet werden.

Gegenstand der DE 10 2010 007 455 A1 ist ein System und ein Verfahren zum berührungslosen Erfassen und Erkennen von Gesten in einem dreidimensionalen Raum.

Der Literaturstelle PHD-Thesis von Mark John Micire: "Multi-Touch Interaction for Robot Command and Control", Dezember 2010, ist ein Verfahren um Steuern eines Roboters mittels eines Touch-Screens zu entnehmen. Durch Bewegen eines Fingers auf dem Touch-Screen können Bewegungen des Roboters gesteuert werden.

Ein Handgerät zum Steuern eines Roboters ist der US 5 617 515 A zu entnehmen. Mittels eines Rechners wird die Positionierung des Handgerätes in Bezug auf ein Koordinatensystem ermittelt, um Roboter steuern zu können.

Ein Verfahren und eine Vorrichtung zum Programmieren eines Industrieroboters wird in der DE 10 2007 029 398 A1 beschrieben. Dabei wird ein Programmierhandgerät im Raum entsprechend einer gewünschten Orientierung, die ein zu bestimmendes Koordinatensystem einnehmen soll, orientiert.

Ein Handgerät zum Betätigen eines Roboters ist aus der EP 1 795 315 A1 bekannt. Dort wird ein Verfahren gemäß dem Oberbegriff des Anspruchs 1 offenbart, bei dem das Koordinatensystem des Handgerätes zu dem des Roboters erfasst wird, um eine Transformation zu den Koordinatensystem vorzunehmen.

Der DE 603 09 409 T2 ist ein System zur Programmierung eines Roboters mit einem tragbaren Programmierungsterminal zu entnehmen. Dabei besteht die Möglichkeit, das Koordinatensystem des Bediengerätes nach einer Relativbewegung des Bediengerätes zum Roboter durch eine manuelle Eingabe dieser Relativbewegung zu rekalibrieren.

Der vorliegenden Erfindung liegt die Aufgabe zugrunde, ein Verfahren der eingangs genannten Art so weiterzubilden, dass die Sicherheit bei der Bedienung eines Industrieroboters erhöht wird.

Zur Lösung der Aufgabe sieht die Erfindung im Wesentlichen vor, dass das Display-Koordinatensystem nach einer Relativbewegung des Bediengerätes zu dem Roboter-Koordinatensystem durch eine gerichtete Bewegung eines Fingers einer Bedienperson auf dem Touch-Display rekalibriert wird, dass die Rekalibrierung durch Bedienung eines virtuellen Bedienelementes aktiviert wird, dass die gerichtete Bewegung des Fingers auf dem Touch-Display in eine ausgewählte Richtung des Roboter-Koordinatensystems erfasst wird und dass nach Abheben des Fingers eine für die Rekalibrierung benutzte Vektorrichtung zwischen einem ersten Berührungspunkt und einem Loslasspunkt berechnet wird.

Insbesondere ist vorgesehen, dass durch die gerichtete Bewegung des Fingers auf dem Touch-Display die einer Basisachse, wie X- oder Y-Achse, eines kartesischen Koordinatensystems entsprechende ausgewählte Richtung des Roboter-Koordinatensystems nachgebildet wird.

In Weiterbildung sieht die Erfindung vor, dass die Basisachse auf einer Standfläche des Roboters als Markierung gekennzeichnet wird.

Mit Hilfe der berechneten Vektorrichtung, der ausgewählten Richtung des Roboter-Koordinatensystems und dem gemeinsamen Z-Vektor wird eine Rotationsmatrix berechnet, über die fortan alle Bewegungen des Fingers auf dem Touch-Display transformiert werden, bevor diese als Verfahrvorgabe an die Robotersteuerung gesendet werden.

Insbesondere zeichnet sich die Erfindung aus durch ein Verfahren zur Bedienung eines Industrieroboters mittels eines Bediengerätes, umfassend den Verfahrensschritt des Berührens eines virtuellen Bedienelement eines Touch-Displays eines grafischen Bediener-Interfaces, wobei bei Berührung des virtuellen Bedienelementes eine dem Bedienelement zugeordnete Funktion ausgelöst wird und wobei die Bewegung des Industrieroboters relativ zu einem Roboter-Koordinatensystem und die Bewegung auf dem Touch-Display relativ zu einem Display-Koordinatensystem ausgeführt wird, wobei das Display-Koordinatensystem nach einer Relativbewegung des Bediengerätes zu dem Roboter-Koordinatensystem durch eine gerichtete Bewegung des Fingers einer Bedienperson auf dem Touch-Display rekalibriert wird, indem die Rekalibrierung durch Bedienung eines virtuellen Bedienelementes aktiviert wird, die gerichtete Bewegung des Fingers auf dem Touch-Display in eine ausgewählte Richtung des Roboter-Koordinatensystems erfasst wird und nach Abheben des Fingers eine Vektorrichtung zwischen einem ersten Berührungspunkt und einem Loslasspunkt berechnet wird, und mit Hilfe der berechneten Vektorrichtung der ausgewählten Richtung des Roboter-Koordinatensystems und einem gemeinsamen Z-Vektor eine Rotationsmatrix berechnet wird, über die fortan alle Bewegungen des Fingers auf dem Touch-Display transformiert werden, bevor diese als Verfahrvorgabe an die Robotersteuerung gesendet werden.

Vorzugsweise wird die Richtung des rekalibrierten Display-Koordinatensystems grafisch auf dem Touch-Display, insbesondere durch einen ausgerichteten Zeiger, dargestellt.

Erfindungsgemäß erfolgt eine manuelle Rekalibrierung ohne Sensorik. Eine kurze gerichtete Fingerbewegung auf dem Display, die parallel zu einer vorgegebenen Markierung im Arbeitsbereich des Roboters ausgerichtet wird, reicht zur Rekalibrierung aus. Durch die gerichtete Fingerbewegung wird ein Vektor berechnet, der der Rekalibrierung zugrunde gelegt wird.

Insbesondere verläuft die Markierung im Arbeitsbereich des Roboters und fällt vorzugsweise mit einer Achse des Roboterkoordinatensystems wie einer X- oder Y-Achse des kartesischen Koordinatensystems zusammen. Diese Achse kann z. B. auf der Standfläche des Roboters gekennzeichnet oder eine sonstige Markierung wie Pfeil im Arbeitsbereich des Roboters sein. Die kurze gerichtete Fingerbewegung wird auf dem Display insbesondere als Zeiger dargestellt bzw. ein Zeiger wird auf die gerichtete Fingerbewegung ausgerichtet, um optisch einen Vergleich mit der Markierung vornehmen zu können.

Besonders bevorzugt kann die Rekalibrierung auch für beliebige andere frei definierbare Koordinatensysteme wie Frames verwendet werden.

Zu dem Touch-Display ist anzumerken, dass es sich hierbei vorzugsweise um einen marktüblichen Touchscreen mit glatter Oberfläche handelt, der vorzugsweise als kapazitiver Touchscreen ausgebildet ist, gleichwenn auch ein resistiver Touchscreen in Frage kommt.

Gemäß einer weiteren bevorzugten Ausführung des Verfahrens ist vorgesehen, dass die Berührung des virtuellen Bedienelementes auf der Oberfläche des Touch-Displays durch Ermitteln einer ersten Koordinate eines Berührungspunktes erfasst wird und dass eine Auslösung der Funktion des virtuellen Bedienelementes erfolgt, wenn die erste Koordinate des Berührungspunktes nach bleibendem Kontakt mit der Oberfläche des Touch-Displays einen vorgegebenen Koordinatenbereich durch eine manuelle Aktion der Bedienperson verlässt.

Dabei kann die manuelle Aktion durch eine Gestik der Bedienperson ausgelöst werden. Die Gestik kann durch Ziehen eines Fingers der Bedienperson auf dem Touch-Display in den oder aus dem vorgegebenen Koordinatenbereich ausgeführt werden. Vorzugsweise wird die Gestik in eine definierte Richtung ausgeführt, wobei die Sensibilität der Reaktion auf die Fingerbewegung, die Intensität der Gestik stufenlos eingestellt wird.

Des Weiteren bezieht sich die Erfindung auf ein eigenerfinderisches Verfahren zur Bedienung eines Industrieroboters mit einem Handgerät. Dabei ist vorgesehen, dass die Auslösung einer Touch-Funktion eine manuelle Aktion des Bedieners auf dem Touch-Display erfordert. Um ein versehentliches Auslösen von virtuellen Bedienelementen durch unbeabsichtigte Berührung zu verhindern, wird eine Funktion erst ausgelöst, wenn nach der Berührung des Touch-Displays eine spezielle "Kleingestik" ausgeführt wird, z.B. Verziehen des Fingers in eine definierte Richtung. Somit ergibt sich ein "reliable touch".

Die zum Auslösen einer Funktion erforderliche Gestik, also die erforderliche Intensität oder Art der Gestik, kann stufenlos eingestellt werden: Sie reicht von einer einfachen Fingerberührung, allgemein übliche Bedienung des Touch-Displays, bis hin zu einer definierten Geste. Durch haptische Marken, wie die spezielle Ausprägung von Fingermulden im Displayrand, kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Die erfindungsgemäße Vorrichtung zeichnet sich gegenüber dem Stand der Technik insbesondere dadurch aus, dass die Anzahl der Hardwarekomponenten auf ein absolutes Minimum reduziert wird. Alle Bedienfunktionen werden konsequent in Touch-Software realisiert, mit Ausnahme der sicherheitsgerichteten Schalter "Not-Halt" und "Zustimmung". Es sind keine weiteren elektrischen Komponenten wie Folientasten, Schalter oder Signallampen erforderlich. Dadurch ist das System wartungsarm.

Der erreichte Platzgewinn geht zugunsten eines großen komfortablen Touch-Displays. Die auf dem Touch-Display dargestellten virtuellen Bedienelemente und Anzeigen sind für die Industrieanwendung angelegt und sind kontrastreich und groß dargestellt, so dass eine zuverlässige Bedienung möglich ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: ein Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Displayrahmens und
- Fig. 4: einen dritten Abschnitt eines an das Touch-Display angrenzenden Displayrahmens,
- Fig. 5: eine Rückansicht des Programmierhandgerätes,
- Fig. 6: ein schematisches Verfahren zur Bedienung eines Industrieroboters mit einem Bediengerät,
- Fig. 7: einen Ausschnitt einer Bedienoberfläche des Bediengerätes mit virtuellen Bedienelementen,
- Fig. 8: einen Ausschnitt einer Bedienoberfläche des Bediengerätes mit einem Bild mit grafischer Information,
- Fig. 9: eine Bedienoberfläche des Bediengerätes mit verschiedenen Verfahrflächen und

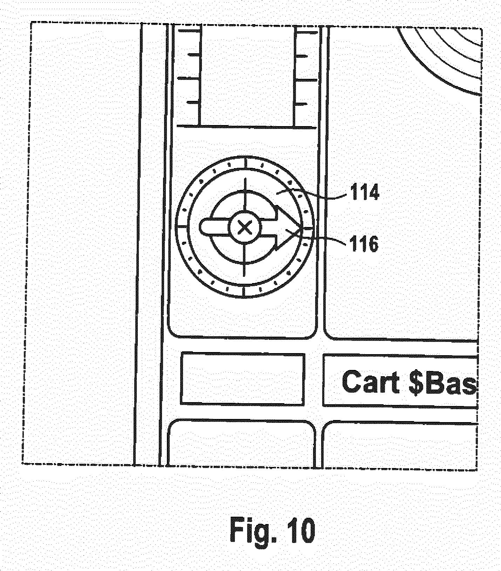

- Fig. 10: ein virtuelles Bedienelement zur Rekalibrierung des Koordinatensystems des Bediengerätes.

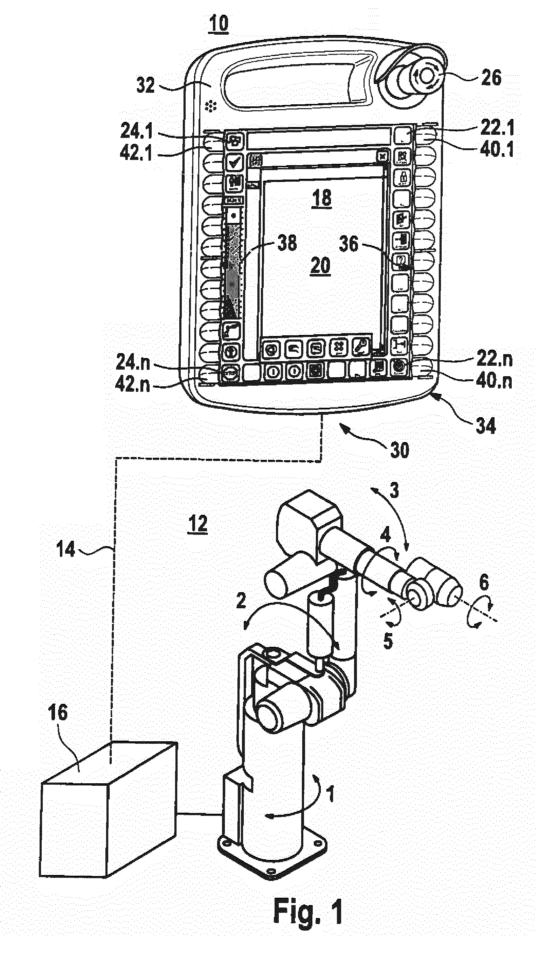

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem berührungsempfindlichen Display 20 nachfolgend Touch-Display genannt. Das Touch-Display 20 dient zur Anzeige zumindest eines virtuellen Bedienelementes 22.1...22.n, 24.1...24.n welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson oder einem Stift die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16 sowie einen Positionssensor zur Bestimmung von Position und Neigung des Bediengerätes.

Das grafische Bediener-Interface 18 mit den Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsgerichteter "Not-Halt" Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n ist ein virtuelles Bedienelement 22.1 ... 22.n, 24.1 ... 24.n zugeordnet.

Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n geführt. Hierdurch werden Fehlbedienungen vermieden bzw. minimiert: Zuerst wird die Position des virtuellen Bedienelementes mit Hilfe der haptischen Marken ertastet und anschließend wird die Funktion durch Berührung des virtuellen Bedienelementes ausgelöst. Ferner ist es nicht erforderlich, dass der Touchscreen, also das Display 20 besonders gestaltet werden muss. Insbesondere und in Abweichung vom Stand der Technik ist es nicht erforderlich, dass auf das Display besondere überlagerte Materialien angebracht werden, wodurch andernfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

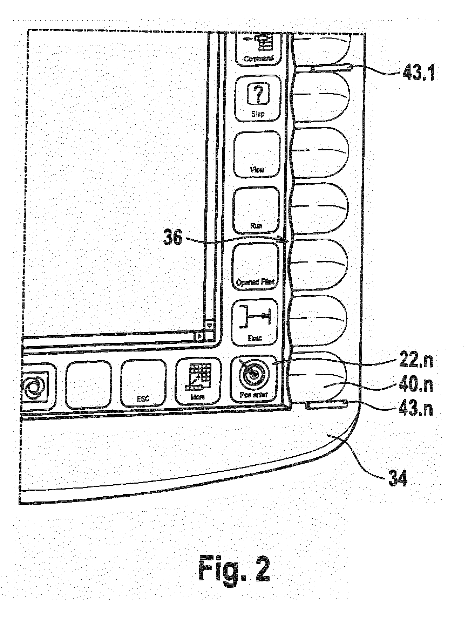

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine sichere Bedienung der virtuellen Bedienelemente gewährleistet. Dabei dient der abgesetzte und besonders ausgeprägte Rahmenabschnitt 36, 38 zur taktilen Orientierung auf dem Touch-Display 20.

In dem in Fig. 2 dargestellten Ausführungsbeispiel sind die haptischen Marken 40.1 ... 40.n, 42.1 ... 42.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Ferner sind haptische Marken 43.1 ... 43.n vorgesehen, die als Noppen ausgebildet und auf einer Oberfläche des Displayrahmens 34 angeordnet sind.

Dadurch wird zum einen die prinzipiell fehlende Haptik eines Touch-Displays 20 kompensiert und zum anderen kann der Bediener die visuelle Aufmerksamkeit auf den Industrieroboter und den Prozess richten ohne auf das Handbedien- bzw. Handgerät 10 schauen zu müssen, wodurch insgesamt die Bediensicherheit erhöht wird. Eine "Blindbedienung" wird ermöglicht.

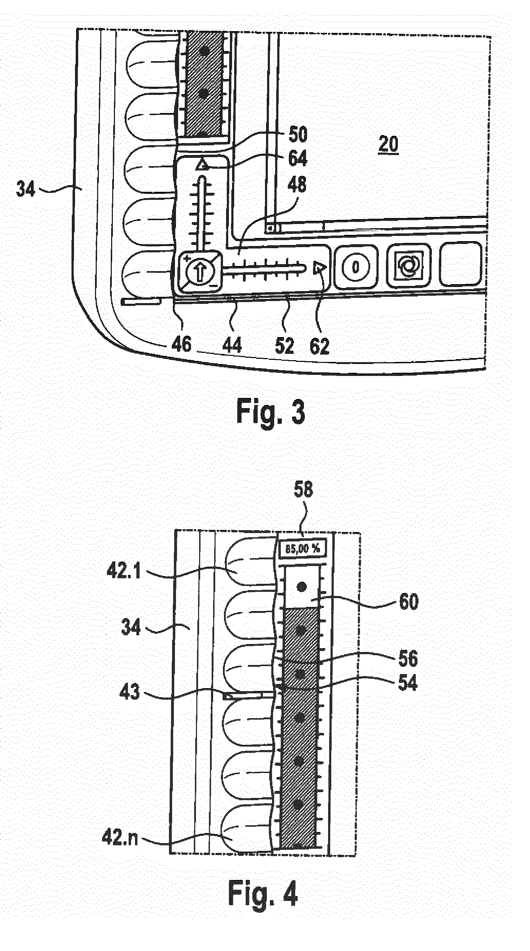

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 auf dem Touch-Display 20 vorgesehen, welche beispielsweise in linearer Richtung entlang eines displayseitigen Rahmenabschnitts 50 oder des anderen Rahmenabschnitts 52 der Rahmenecke 44 bewegt wird.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles SchiebeElement 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem DisplayRand mit hoher Auflösung, z.B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 22.1 .... 22.n, 24.1 ... 24. In sind halb offen ausgeführt und in Richtung des Touch-Displays 20 geöffnet, so dass ein Finger wie in einer Rinne geführt auf das Touch-Display 20 gleiten und dort eine Funktion des virtuellen Bedienelementes 22.1 ... 22.n, 24.1 ... 24.n auslösen kann.

Gemäß eines eigenständigen Erfindungsgedankens ist vorgesehen, dass die Auslösung einer dem virtuellen Bedienelement 22.1...22.n, 24.1...24.n zugeordneten Funktion eine manuelle Aktion der Bedienperson auf dem Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des Touch-Displays 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Sobald die Bedienperson mit dem Finger z.B. ausgehend von der Fingermulde 40.n das virtuelle Bedienelement 22.n berührt, werden die entsprechenden Koordinaten des Berührungspunktes auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt bzw. einen vordefinierten Koordinatenbereich erreicht. Wenn das virtuelle Bedienelement ausgelenkt ist und somit auslösebereit ist (Auslösung erfolgt bei Loslassen des Fingers), wird dies durch eine optische Kennung, z.B. durch eine farbige Umrandung, am Bedienelement gekennzeichnet. Wird eine versehentliche Auslenkung wieder rückgängig gemacht, indem das Bedienelement wieder in den Ursprung zurückgezogen wird, wird dies durch ein Verschwinden dieser optischen Kennung kenntlich gemacht.

Gemäß einer weiteren eigenerfinderischen Ausführungsform der Erfindung werden virtuelle Bedienelemente 48, die z.B. in der Rahmenecke 46 des Displayrahmens 34 platziert sind, mit einer besonderen Gestensteuerung verknüpft. Diese können z.B. entlang der Rahmenabschnitte 50, 52 in zwei Richtungen 62, 64 verschoben werden, wie dies in Fig. 3 dargestellt ist. Jeder Bewegungsrichtung 62, 64 ist eine wählbare Funktion zugeordnet. So ist es z.B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition 66 geführt, stellt sich der Parameter analog der Auslenkung wieder auf null zurück. Diese Funktion kann verwendet werden, um z.B. ein Bewegungsprogramm in positive oder negative Richtungen zu starten und dabei die Geschwindigkeit stufenlos zu variieren.

Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung verhindert.

Ein weiterer eigenerfinderischer Gedanke der Erfindung bezieht sich auf die Realisierung einer sogenannten Override-Funktion (Geschwindigkeitsregler), die über das als Schiebe-Bedienelement 60, welches in Fig. 4 dargestellt ist, realisiert wird. Dazu wird das Schiebe-Bedienelement 60 entlang des Rahmenabschnitts 56 und mittig zur haptischen Marke 43 platziert. Dadurch kann die Position des Schiebe-Bedienelementes 60 ertastet und durch Verschiebung des Fingers entlang des Rahmenabschnitts 56 verstellt werden. Die blinde Verstellung wird durch die haptischen Marken 42.1...42.n, 43, 54 der Rahmenabschnitte 38, 56 zusätzlich unterstützt. Der sogenannte Override kann bei einer Verschiebung zwischen zwei haptischen Marken um einen definierten Betrag, z.B. 20 %, verstellt werden. Mittels des randseitig angeordneten Schiebe-Bedienelementes 60 können auch andere analoge Größen wie Prozessparameter in Blindbedienung eingestellt werden.

Ein weiteres eigenerfinderisches Merkmal bezieht sich auf die symmetrische Anordnung der haptischen Marken 22.1...22.n, 24.1...24.n bezogen auf die Längs- bzw. Querachse des Touch-Displays 20. Die Längsmittenachse ist dabei die Gerade, die mittig und parallel zu den Längsrahmenschenkeln des Displayrahmens 34 verläuft. Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsachse des Touch-Displays 20 gespiegelt.

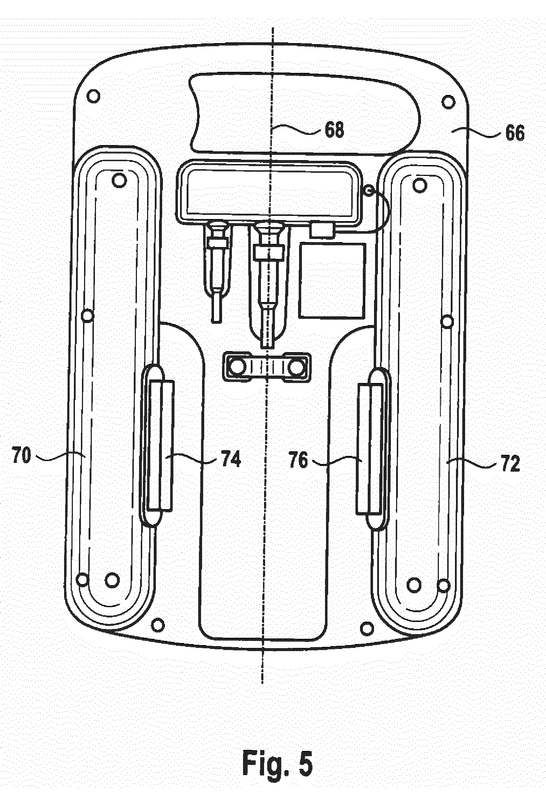

Fig. 5 zeigt eine Rückseite 66 des Gehäuses 32. Auf der Rückseite 66 und symmetrisch zur Längsachse 68 sind Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimm-Schalter oder Zustimm-Taster 74, 76 integriert, von denen wahlweise einer für die Verfahrfreigabe des Industrieroboters betätigt werden muss.

Durch diese symmetrische Anordnung wird einer Handermüdung vorgebeugt, da die Zustimm-Schaltelemente 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

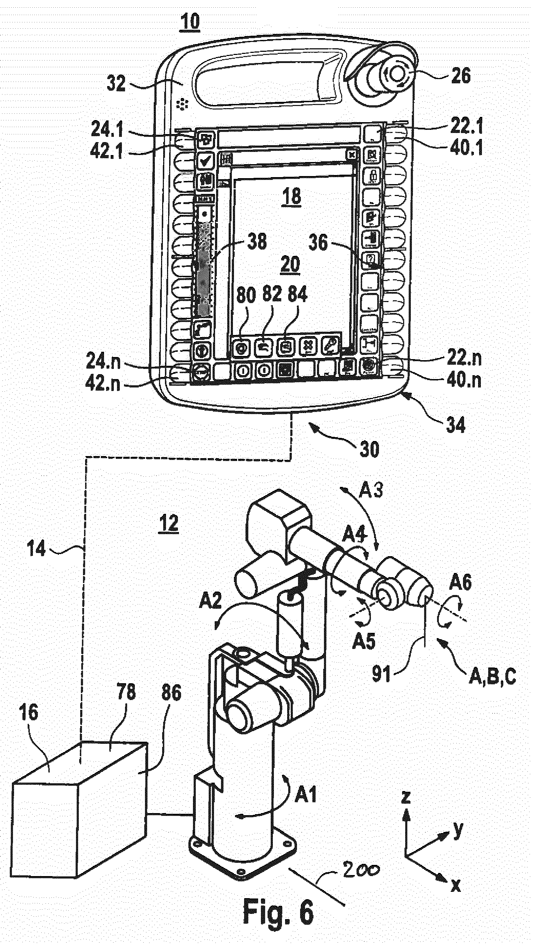

Eine weitere eigenerfinderische Ausführungsform der Erfindung zeichnet sich dadurch aus, dass ein bislang üblicher Schlüsselschalter für die Anwahl der Roboterbetriebsarten "Einrichten", "Automatik", "Automatik-Test" durch eine Softwarefunktion ersetzt wird. Die Besonderheit liegt u.a. in der Datenverarbeitung in sicherer Technik. Das Touch-Display 20 ist prinzipiell ein einkanaliges und somit unsicheres Gerät. Unter Zuhilfenahme einer in die Robotersteuerung 16 gemäß Fig. 6 integrierten Sicherheitssteuerung 78, nachfolgend SafetyController 78 genannt, wird eine sichere Funktionalität der Software gewährleistet. Der SafetyController 78 ist in der Europäischen Patentanmeldung 1 035 953 beschrieben, deren Offenbarung vollumfänglich in die vorliegende Anmeldung aufgenommen wird.

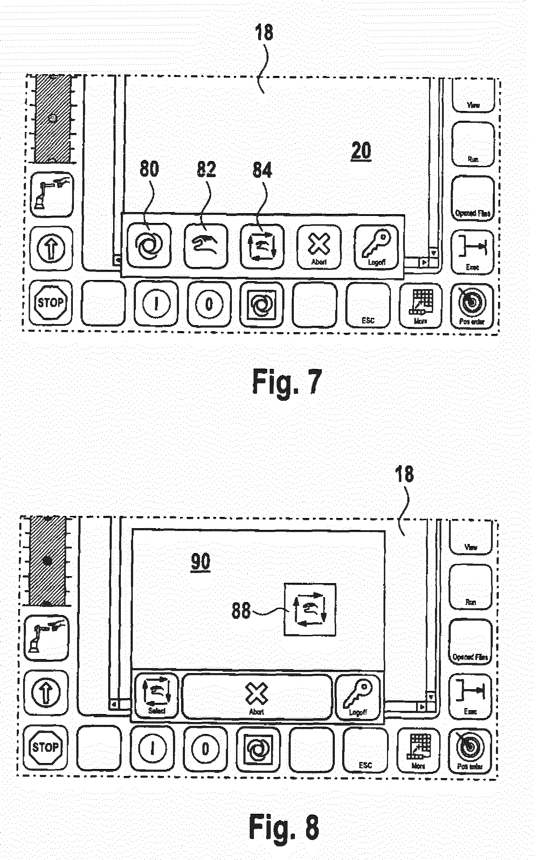

Auf dem Touch-Display 20 werden von der Bedienoberfläche 18 verschiedene Betriebsart-Optionen in Form von virtuellen Bedienoberflächen 80, 82, 84 wie Softkeys zur Auswahl angeboten, wie dies in Fig. 7 dargestellt ist. Über die Berührung eines dieser Softkeys 80, 82, 84 wählt der Bediener eine neue Betriebsart "X" aus. Von der Software der Bedienoberfläche wird die neu ausgewählte Betriebsart als Kommando
"Anforderung neue Betriebsart-X" an den SafetyController 78 gesendet. Der SafetyController 78 entnimmt aus seinem Speicher 86 eine dieser Betriebsart entsprechende grafische Information wie Icon 88 und platziert es an eine zufällig bestimmte Anzeige-Position in einem größeren Bild 90. Die Position des Icons 88 in dem Bild 90 ist nur dem SafetyController 78 bekannt. Dieses Bild 90 wird als Bilddatei wie Bitmap zur Bedienoberfläche 18 gesendet und dort in einer definierten Position zur Anzeige gebracht, wie dies in Fig. 8 dargestellt ist.

Durch einen Fingertip auf das dargestellte Icon 88 muss der Bediener die vom SafetyController 78 erkannte Betriebsart bestätigen. Eine Berührungs-Position auf dem Touch-Display wird in Form von Touchkoordinaten erfasst und an den SafetyController 78 zurückgesendet. Dieser vergleicht die Berührungs-Position mit der ausschließlich der Sicherheitssteuerung, also dem Safety Controller 78 bekannten zufälligen Anzeige-Position des Icons 88 in dem Bild 90. Der Vergleich erfolgt unter Berücksichtigung der bekannten Position des Bildes 90 auf dem Touch-Display 20. Ist die Berührungsposition (innerhalb einer definierten Toleranz) gleich der Anzeigeposition, wird der eingeleitete Betriebsartenwechsel ausgeführt. Andernfalls wird der Betriebsartenwechsel verworfen und die vorherige Betriebsart bleibt erhalten.

Durch dieses Verfahren entsteht ein sicherer Wirkkreis zwischen Bediener und SafetyController 78:
- Bediener wählt eine Betriebsart an,
- SafetyController 78 zeigt die erkannte Betriebsart auf dem Bediengerät 10 an,
- Bediener bestätigt dem SafetyController 78 die Richtigkeit der angezeigten Betriebsart,
- SafetyController 78 stellt die neue Betriebsart ein.

Alternativ zum o. g. Verfahren kann der SafetyController 78 einen ikonisierten Zahlencode anzeigen, der vom Bediener erkannt, und als Zahl über eine angezeigte Tastatur eingegeben werden muss. Die Berührungs-Position der angezeigten Zahlen der Tastatur wird an den SafetyController gesendet, der darüber die Richtigkeit der Eingabe überprüft.

Die Icons 80, 82, 84 sind in dem SafetyController 78 in sicherer Technik gespeichert.

Optional kann eine Anforderung zum Betriebsartenwechsel auch über einen Hardware-Schlüsselschalter kommen.

Das Einstecken/Abziehen des Schlüssels in den Betriebartenwahlschalter wird durch ein Login/Logout-Verfahren mittels PIN nachgebildet.

Die Möglichkeit nach dem Berühren des Touch-Displays 20 den Finger mehr oder weniger zu "ziehen", wird gemäß eines eigenerfinderischen Verfahrens genutzt um eine analoge Verfahrvorgabe für den Industrieroboter 12 zu erzeugen. So kann der Industrieroboter 12 gemäß Fig. 6 in 6 Freiheitsgraden z. B. X, Y, Z und Orientierungen A, B, C eines Werkzeugs 91 feinfühlig gesteuert werden.

Mit der Auslenkung des Fingers einer Bedienperson ist es möglich eine Positionsvorgabe an den Industrieroboter 12 zu geben, ähnlich der Cursorsteuerung per Touchpad bei einem Notebook. Der Industrieroboter 12 lässt sich dabei gleichzeitig in zwei Koordinatenrichtungen, z.B. X und Y, verfahren.

In einem weiteren Modus wird durch eine Auslenkung des Fingers eine Geschwindigkeitsvorgabe für den Industrieroboter 12 erzeugt: je mehr der Finger ausgelenkt ist, umso schneller fährt der Roboter.

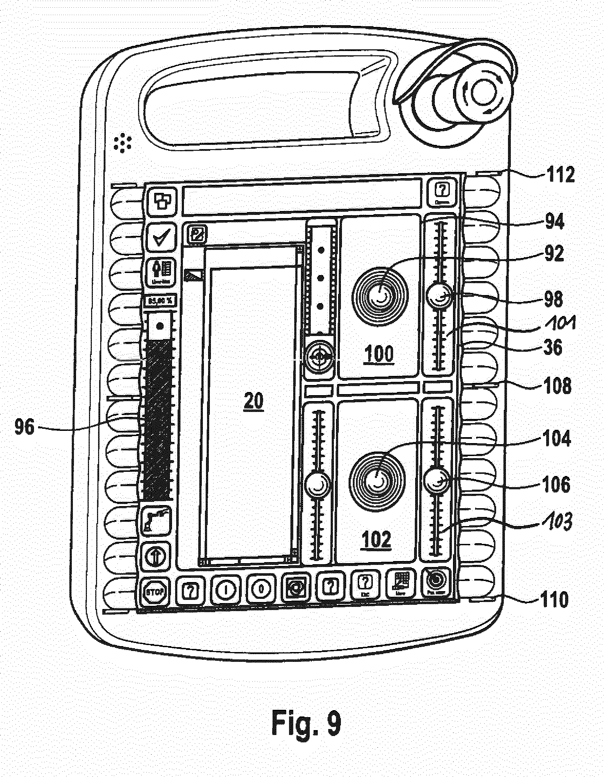

Nach dem Berühren einer in Fig. 9 dargestellten ausgewählten Verfahrfläche 100 aktiviert der Benutzer ein virtuelles Bedienelement 92, das in den Bereich des Berührungspunktes automatisch positioniert wird. Anschließend kann das virtuelle Bedienelement 92 mittels des Fingers auch über eine Begrenzung 94 hinaus über das gesamte Touch-Display 20 gezogen werden und so Fahrvorgaben erzeugen. Nach dem Loslassen bleibt der Industrieroboter 12 sofort stehen. Danach muss für eine erneute Verfahrvorgabe die gewünschte Fläche 100 wieder getroffen werden.

Die Sensibilität der Reaktion auf eine Fingerbewegung kann über ein virtuelles Bedienelement 96 wie Schiebe-Regler (Override) sowohl für die Positionsvorgabe als auch für die Geschwindigkeitsvorgabe stufenlos eingestellt werden.

Die sensitive Fläche 100 für das 2D-Verfahren ist in der Nähe des Displayrandes 36 platziert, so dass sie mit einem deutlichen Abstand zum Displayrand mit dem Finger (z.B. mit dem abgespreizten Daumen) noch gut erreicht werden kann.

Um auch in eine dritte Koordinatenrichtung (z.B. Z-Koordinate des kartesischen Koordinatensystem) verfahren zu können, wird ein etwa fingerbreites Feld 101 mit einem virtuellen Bedienelement 98 direkt seitlich am Displayrand 36 platziert, so dass dieses Feld 101 mit dem Finger "ertastet" werden kann, indem der Finger, insbesondere der Daumen, entlang des Displayrandes 36 geführt wird. Dieses Feld erzeugt eine eindimensionale Verfahrvorgabe, z.B. in Z-Richtung.

Durch die spezielle Anordnung kann der Bediener die zwei Verfahrfelder 100, 101 deutlich unterscheiden und blind erreichen: Das Feld 101 direkt am Displayrand 36, wobei der Finger spürbaren Kontakt mit dem Gehäuserand hat, aktiviert die Verfahrvorgabe für die dritte Dimension (Z-Dimension). Das Feld 100, welches ca. einen Finger- oder Daumenbreit neben dem Displayrand 36 platziert ist, aktiviert die gleichzeitige Verfahrvorgabe in zwei Dimensionen (X-Y-Dimension).

Der Industrieroboter 12 besitzt 6 Freiheitsgrade. Für die Einstellung der Orientierung des Werkzeugs 91 mit den drei Winkeln (A, B, C) wird das gleiche Verfahren wie oben beschrieben verwendet. Dazu wird das Display in zwei Zonen aufgeteilt. In z. B. der oberen Zone befinden sich die Verfahrfelder 100, 101 für die Dimensionen 1-3 (z.B. X, Y, Z). In z. B. der unteren Zone befinden sich die Verfahrfelder 102, 103 für die Dimensionen 4-6 z.B. A, B, C. Über die haptischen Marken in Form von Noppen 108, 110, 112 können die beiden Verfahrfelder 100, 101 und 102, 103 blind unterschieden werden.

Durch Berühren der Verfahrfelder 102, 103 wird in den Verfahrfeldern ein virtuelles Bedienelement 104, 106 aktiviert, dass in dem Bereich des Berührungspunktes automatisch positioniert wird. Anschließend kann das virtuelle Bedienelement 104, 106 auch über das gesamte Touch-Display 20 gezogen und so eine Einstellung der Orientierung des Werkzeugs 91 erzeugen.

Mit einem Multitouch-Display 20 kann der Industrieroboter 12 so in allen 6 Freiheitsgraden simultan verfahren werden. Mit einem Singletouch-Display können die Verfahrfunktionen nur sequentiell verwendet werden.

Beim Verfahren mittels der zuvor erläuterten TouchMotion-Funktion ist das Touch-Display idealerweise kollinear zum Koordinatensystem des Industrieroboters ausgerichtet. In diesem Fall stimmt die Roboterbewegung mit der Fingerbewegung auf dem Touch-Display optimal überein.

Dreht sich jedoch der Bediener mit dem Bediengerät 10 zur Seite weg, so ist diese Übereinstimmung nicht mehr gegeben. Die Bewegungsrichtung des Roboters stimmt dann nicht mehr mit der Bewegungsrichtung des Fingers überein.

Das Koordinatensystem des Touch-Displays muss in diesem Fall wieder zum Koordinatensystem des Roboters rekalibriert werden.

Erfindungsgemäß ist auf dem Touch-Display 20 ein spezielles virtuelles Bedienelement 114 mit einem Zeiger 116 vorgesehen. Dieses Bedienelement 114 muss zunächst mit einem Finger berührt werden und anschließend muss der Finger in die ausgewählte Richtung des Roboter-Koordinatensystems, z. B. X-Richtung, gezogen werden. Zur visuellen Unterstützung des Bedieners kann die X-Richtung in dem Arbeitsbereich des Roboters z. B. durch eine Markierung auf der Bodenfläche gekennzeichnet werden. Die Bewegung des Fingers auf dem Bedienelement 114 und damit die Ausrichtung des Zeigers 116 erfolgt parallel zu der im Arbeitsbereich des Roboters vorhandenen Markierung. Eine solche ist beispielhaft in Fig. 6 mit "200" gekennzeichnet. Nach dem Abheben des Fingers von dem Touch-Display 20 wird die Vektorrichtung zwischen dem ersten Berührungspunkt und dem Loslasspunkt berechnet. Mit Hilfe dieses Vektors, der ausgewählten Roboter-Koordinatenachse und einem gemeinsamen Z-Vektor wird eine Rotationsmatrix berechnet, über die fortan alle Fingerbewegungen transformiert werden, bevor sie als Verfahrvorgabe an den Roboter gegeben werden. Die Rekalibrierung erfolgt somit schnellstmöglich mit einer einzigen Geste. Nach der Rekalibrierung sind beide Koordinatensysteme wieder kollinear zueinander eingestellt, quasi eingenordet. Zur besseren Überprüfbarkeit wird die Richtung des kalibrierten Display-Koordinatensystems grafisch auf dem Touch-Display dargestellt.

Das Koordinatensystem für den Roboter ist in Fig. 6 eingezeichnet. Man erkennt, dass die Markierung 200 parallel zur X-Achse verläuft. Die Y-Achse verläuft in der Ebene der Standfläche des Roboters 12. Senkrecht hierzu verläuft die Z-Achse, um die der Roboter 12 drehbar ist (Pfeil A1).

In den Fig. 1 und 6 werden durch die Pfeile 1, 2, 3, 4, 5, 6 bzw. A1, A2, A3, A4, A5, A6 die Schwenk- bzw. Drehbewegungen des Roboters 12 bzw. des das Werkzeug 91 haltenden Arms gekennzeichnet. Somit kann im Ausführungsbeispiel der Roboter 12 mit 6 Freiheitsgraden das Werkzeug 91 bewegen.

Diese erfindungsgemäße Kalibrierungsmethode, die ohne Sensorik arbeitet, kann auch für beliebige andere Koordinatensysteme, wie z. B. frei definierbare Frames, verwendet werden.

## Patentansprüche

1. Verfahren zur Bedienung eines Industrieroboters (12) mittels eines Bediengerätes (10), umfassend den Verfahrensschritt des Berührens eines virtuellen Bedienelementes eines Touch-Displays (20) eines grafischen Bediener-Interfaces, wobei bei Berührung des virtuellen Bedienelementes eine dem Bedienelement zugeordnete Funktion ausgelöst wird und wobei die Bewegung des Industrieroboters (12) relativ zu einem Roboter-Koordinatensystem und die Bewegung auf dem Touch-Display (20) relativ zu einem Display-Koordinatensystem ausgeführt wird,
**dadurch gekennzeichnet,**
**dass** das Display-Koordinatensystem nach einer Relativbewegung des Bediengerätes (10) zu dem Roboter-Koordinatensystem durch eine gerichtete Bewegung eines Fingers einer Bedienperson auf dem Touch-Display (20) rekalibriert wird, dass die Rekalibrierung durch Bedienung eines virtuellen Bedienelementes aktiviert wird, dass die gerichtete Bewegung des Fingers auf dem Touch-Display (20) in eine ausgewählte Richtung des Roboter-Koordinatensystems erfasst wird und dass nach Abheben des Fingers eine für die Rekalibrierung benutzte Vektorrichtung zwischen einem ersten Berührungspunkt und einem Loslasspunkt berechnet wird.

2. Verfahren nach Anspruch 1,
**dadurch gekennzeichnet,**
**dass** durch die gerichtete Bewegung des Fingers auf dem Touch-Display (20) die einer Basisachse, wie X- oder Y-Achse eines kartesischen Koordinatensystems, entsprechende ausgewählte Richtung des Roboter-Koordinatensystems nachgebildet wird.

3. Verfahren nach Anspruch 1 oder 2,
**dadurch gekennzeichnet,**
**dass** die Basisachse z. B. auf einer Standfläche des Roboters (12) als Markierung (200) gekennzeichnet wird.

4. Verfahren nach zumindest einem der vorhergehenden Ansprüche
**dadurch gekennzeichnet,**
**dass** mit Hilfe der berechneten Vektorrichtung, der ausgewählten Richtung des Roboter-Koordinatensystems und einem gemeinsamen Z-Vektor eine Rotationsmatrix berechnet wird, über die fortan alle Bewegungen des Fingers auf dem Touch-Display (20) transformiert werden, bevor diese als Verfahrvorgabe an die Robotersteuerung gesendet werden.

5. Verfahren nach zumindest einem der vorhergehenden Ansprüche
**dadurch gekennzeichnet,**
**dass** die Richtung des kalibrierten Display-Koordinatensystems grafisch auf dem Touch-Display (20), insbesondere als ausgerichteter Zeiger, dargestellt wird.

6. Verfahren nach zumindest einem der vorhergehenden Ansprüche
**dadurch gekennzeichnet,**
**dass** die Rekalibrierung für beliebige andere Koordinatensysteme wie frei definierbare Frames verwendet wird.

## Claims

1. A method for operating an industrial robot (12) by means of an operating device (10), comprising the method step of touching a virtual operating element of a touch display (20) of a graphic user interface, wherein a function associated with the operating element is triggered when the virtual operating element is touched, and wherein the movement of the industrial robot (12) is carried out relative to a robot coordinate system and the movement on the touch display (20) is carried out relative to a display coordinate system,
**characterized in that**
following a relative movement of the operating device (10) relative to the robot coordinate system, the display coordinate system is recalibrated by a directed movement of a finger of an operating person on the touch display (20), that the recalibration is activated by actuating a virtual operating element, that the directed movement of the finger on the touch display (20) in a selected direction of the robot coordinate system is detected, and that a vector direction used for the recalibration between a first contact point and a release point is calculated after the finger is lifted off.

2. The method according to claim 1,
**characterized in that**
as a result of the directed movement of the finger on the touch display (20), the selected direction of the robot coordinate system corresponding to a base axis such as x- or y-axis of a Cartesian coordinate system is reproduced.

3. The method according to claim 1 or 2,
**characterized in that**
the base axis is indicated, for example, by a marking (200) on a floor space of the robot (12).

4. The method according to at least one of the preceding claims,
**characterized in that**
with the aid of the calculated vector direction, of the selected direction of the robot coordinate system and a shared z-vector, a rotation matrix is calculated, via which henceforth all movements of the finger on the touch display (20) are transformed, before they are sent as a traverse setting to the robot control.

5. The method according to at least one of the preceding claims,
**characterized in that**
the direction of the calibrated display coordinate system is depicted graphically on the touch display (20), in particular as an oriented pointer.

6. The method according to at least one of the preceding claims,
**characterized in that**
the recalibration is used for any other coordinate systems, such as freely definable frames.

## Revendications

1. Procédé de commande d'un robot industriel (12) au moyen d'un appareil de commande (10), comprenant l'étape de procédé consistant à toucher un élément de commande virtuel d'un écran tactile (20) d'une interface utilisateur graphique, sachant qu'en touchant l'élément de commande virtuel est déclenchée une fonction associée à l'élément de commande et que sont effectués le mouvement du robot industriel (12) par rapport à un système de coordonnées de robot et le mouvement sur l'écran tactile (20) par rapport à un système de coordonnées d'écran,
**caractérisé en ce**
**qu'**après un mouvement relatif de l'appareil de commande (10) par rapport au système de coordonnées de robot, le système de coordonnées d'écran est recalibré par un mouvement ciblé d'un doigt d'un opérateur sur l'écran tactile (20), que le recalibrage est activé par actionnement d'un élément de commande virtuel, que le mouvement ciblé du doigt sur l'écran tactile (20) est saisi dans une direction sélectionnée du système de coordonnées de robot, et qu'après retrait du doigt, une direction vectorielle utilisée pour le recalibrage est calculée entre un premier point de contact et un point de retrait.

2. Procédé selon la revendication 1,
**caractérisé en ce**
**que** par le mouvement ciblé du doigt sur l'écran tactile (20) est reproduite la direction sélectionnée du système de coordonnées de robot correspondant à un axe de base, tel qu'un axe X ou Y, d'un système de coordonnées cartésiennes.

3. Procédé selon la revendication 1 ou 2,
**caractérisé en ce**
**que** l'axe de base est signalé en tant que marquage (200), par exemple sur une surface d'installation du robot (12).

4. Procédé selon au moins une des revendications précédentes,
**caractérisé en ce**
**qu'**à l'aide de la direction vectorielle calculée, de la direction sélectionnée du système de coordonnées de robot et d'un vecteur Z commun est calculée une matrice de rotation, au moyen de laquelle sont alors transformés tous les mouvements du doigt sur l'écran tactile (20) avant d'être envoyés à la commande du robot en tant qu'instructions de déplacement.

5. Procédé selon au moins une des revendications précédentes,
**caractérisé en ce**
**que** la direction du système calibré de coordonnées d'écran est représentée graphiquement sur l'écran tactile (20), en particulier sous forme d'aiguille pointée.

6. Procédé selon au moins une des revendications précédentes,
**caractérisé en ce**
**que** le recalibrage est utilisé pour d'autres quelconques systèmes de coordonnées, tels que des trames librement définissables.
